# EUROPÄISCHE PATENTSCHRIFT

(11) **EP 1 044 490 B1**
(45) Veröffentlichungstag und Bekanntmachung des Hinweises auf die Patenterteilung: **03.09.2008**
(21) Anmeldenummer: 99970797.9
(22) Anmeldetag: 02.10.1999
(51) Int. Cl.: H02H 7/085

(54) **VERFAHREN ZUR ELEKTRONISCHEN ÜBERWACHUNG UND STEUERUNG DES ÖFFNUNGS- UND SCHLIESSVORGANGS VON ELEKTRISCH BETRIEBENEN AGGREGATEN**
METHOD FOR ELECTRONIC SURVEILLANCE AND CONTROL OF THE OPENING AND CLOSING PROCEDURE FOR ELECTRICALLY OPERATED UNITS
PROCEDE POUR LA SURVEILLANCE ET LA COMMANDE ELECTRONIQUES DE L'OUVERTURE ET DE LA FERMETURE D'ORGANES FONCTIONNANT A L'ELECTRICITE

(30) Priorität: 21.10.1998 DE 19848468
(43) Veröffentlichungstag der Anmeldung: 18.10.2000
(73) Patentinhaber: ROBERT BOSCH GMBH, 70442 Stuttgart (DE)
(72) Erfinder: LAMM, Hubert, D-77876 Kappelrodeck (DE)
(86) Internationale Anmeldenummer: PCT/DE1999/003199
(87) Internationale Veröffentlichungsnummer: WO 2000/024106

(56) Entgegenhaltungen:
- DE-A- 4 020 351

## Beschreibung

Die Erfindung betrifft ein Verfahren zur elektronischen Überwachung und Steuerung des Öffnungs- und Schließvorgangs von elektrisch betriebenen Aggregaten nach den Merkmalen des Oberbegriffs von Anspruch 1.

### Stand der Technik

Verfahren der gattungsgemäßen Art sind bekannt. Bei diesen Verfahren werden einer Steuerelektronik über eine Sensoreinrichtung ursächlich mit dem Aggregat zusammenhängende Meßwerte übermittelt. Meßgrößen stellen beispielsweise die Drehzahl im Aggregat angeordneter Elektromotoren und die Öffnungs- und Schließgeschwindigkeit eines zugehörigen Stellorgans dar. Dabei soll der Öffnungs- und Schließvorgang, beispielsweise eines Fensters oder eines Schiebedaches, mittels elektrischer Bedienelemente steuerbar sein und über eine Sicherheitsabschaltung beeinflußbar sein. Eine solche Sicherheitsabschaltung soll ein Einklemmen von Gegenständen oder Extremitäten verhindern. Die Steuerung erfolgt üblicherweise in Abhängigkeit von auf dem Aggregat wirkenden Kräften, das heißt, wird für die Bewegung des zugehörigen Stellorgans ein für den Einklemmfall zugrunde liegender Grenzwert überschritten, so kommt es zu einer Abschaltung beziehungsweise zum Reversieren der Bewegung des Fensterhebers oder des Schiebedaches.

In bestimmten Fahrsituationen, insbesondere beim Befahren von Strecken, die starke Schäden aufweisen, kommt es infolge der Bewegung der Kraftfahrzeugkarosserie zu zusätzlichen Beschleunigungskräften. Um eine Verfälschung der auf das Aggregat wirkenden Kräfte zu vermeiden, müssen diese Beschleunigungskräfte erfaßt und ihr Einfluß auf die Sicherheitsabschaltung eliminiert werden. In der DE 40 20 351 A1 wird hierzu ein die Beschleunigungskräfte erfassendes zusätzliches Sensorelement dem Aggregat zugeordnet. Nachteilig ist jedoch der infolge des Einbaus benötigte zusätzliche Platzbedarf und die Kosten eines solchen Sensorelements.

### Vorteile der Erfindung

Durch das erfindungsgemäße Verfahren mit den im Anspruch 1 genannten Merkmalen ist es möglich, eine Erfassung und Eliminierung der störenden, auf das Aggregat einwirkenden Beschleunigungskräfte ohne die Anordnung eines zusätzlichen Sensorelementes zu ermöglichen. Hierbei wird ein von der Beschleunigungskraft abhängiges Signal aus einer Motordrehzahl des elektrischen Stellorgans ermittelt.

Vorteilhaft bei einer derartigen Ausgestaltung ist, daß ein Sensorelement, das zur Erfassung der Motordrehzahl des elektrischen Stellorgans dient und in der Regel bei bekannten Steuerelektroniken bereits vorhanden ist, dazu genutzt wird, auch die einwirkenden Beschleunigungskräfte zu erfassen. Auf diese Weise kann ein solches Aggregat kostengünstiger realisiert werden.

Weitere vorteilhafte Ausgestaltungen des erfindungsgemäßen Verfahren ergeben sich aus den übrigen, in den Unteransprüchen genannten Merkmalen.

### Zeichnungen

Das Verfahren wird nachfolgend anhand der zugehörigen Zeichnungen näher erläutert. Es zeigen:
- Figur 1: eine schematische Anordnung eines Sensorelementes zur Erfassung einer Motordrehzahl und
- Figur 2: ein schematisches Blockschaltbild zur Ermittlung eines Rüttelfaktors.

### Beschreibung des Ausführungsbeispiels

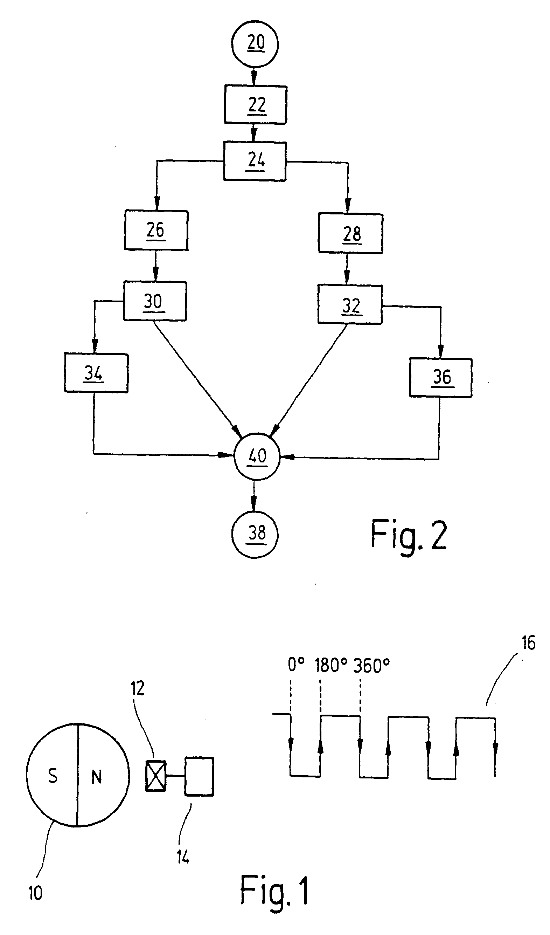

In Figur 1 ist in schematischer Weise die Erfassung einer Motordrehzahl 20 mittels eines Ringmagneten 10, der üblicherweise auf einer Ankerwelle eines Elektromotors angeordnet ist, dargestellt. Durch die Rotation der Ankerwelle induziert der Ringmagnet 10 in wenigstens einem Hallelement 12 ein Signal 16, das in einer nachfolgenden Recheneinheit 14 ausgewertet wird.

Ein solches Signal 16 ist ebenfalls in der Figur 1 schematisch dargestellt, wobei der Verlauf des Signals 16 negative und positive Flanken aufweist. So fällt ausgehend von einem Winkel von 0° zunächst das Signal 16 ab (negative Flanke). Nachfolgend steigt das Signal 16 wieder bei einem Drehwinkel von 180° an (positive Flanke). Die positiven Flanken und negativen Flanken werden durch die Rotation des polarisierten Ringmagneten 10 bestimmt. So ist über das vom Hallelement 12 gelieferte Signal 16 die Drehzahl der Ankerwelle des Elektromotors ableitbar. Eine komplette Umdrehung der Ankerwelle hat zwei negative Flanken des Signals 16 zur Folge. Eine Änderung der Frequenz der negativen Flanken erfolgt durch von außen einwirkende Beschleunigungskräfte, die über eine mechanische Kopplung der zu betätigenden Aggregate mit der Ankerwelle sich auf die Motordrehzahl auswirken.

Figur 2 zeigt ein Blockschaltbild zur Ermittlung eines Rüttelfaktors 40, ausgehend von der Motordrehzahl 20 zum Zeitpunkt t₁. Zunächst wird eine zeitliche Änderung der Motordrehzahl 20 berechnet. Hierzu wird die Motordrehzahl 20 zu einem Zeitpunkt t₁ mit der Motordrehzahl 20 zu einem Zeitpunkt t₂ verglichen. Diese Ableitung 22 wird dann nachfolgend hinsichtlich ihrer Größe und ihres Vorzeichens bewertet. In den Fällen, in denen der Wert 24 der Ableitung 22 einerseits größer 0 ist und andererseits einen Grenzwert überschreitet, erfolgt die Setzung eines Rüttelfaktors 40 gemäß eines additiven Verfahrens 26. In allen anderen Fällen erfolgt die Setzung des Rüttelfaktors 40 durch ein degressives Verfahren 28. Ein additives Verfahren 26 wird dann angewendet, wenn der Wert 24 der Ableitung 22 größer 0 ist, das heißt, daß in diesem Fall die Motordrehzahl 20 erhöht ist. Zusätzlich wird durch die Setzung des Grenzwertes eine Dämpfung der Signale ermöglicht und das Systemrauschen minimiert.

Das additive Verfahren 26 wird wie folgt durchgeführt:

Auf einen vom Zeitpunkt t₁ gegebenen Rüttelfaktor 40 wird entsprechend dem Wert 24 der Ableitung 22 ein Zusatzfaktor addiert. Ein sich ergebender neuer Wert 30 des Rüttelfaktors 40 wird nachfolgend hinsichtlich eines frei setzbaren Grenzwertes (Maximalwert 34) des Rüttelfaktors 40 bewertet. Übersteigt der Wert 30 den Grenzwert, so wird der Wert 30 dem Maximalwert 34 gleichgesetzt. Ist der Wert 30 kleiner als der Grenzwert, so stellt er die Größe des Rüttelfaktors 40 zum Zeitpunkt t₂ dar und wird in einer nachfolgenden Routine 38 zur Steuerung eines Aggregates genutzt.

Bei dem degressiven Verfahren 28 wird der Wert 24 des Rüttelfaktors 40 gemäß eines vorgegebenen Korrekturwertes zurückgeführt, und es ergibt sich ein neuer Wert 32 für den Rüttelfaktor 40. Dieser neue Wert 32 wird wiederum bewertet. In den Fällen, in denen der Wert 32 kleiner 0 ist, wird der Wert 32 auf einen Minimalwert 36, beispielsweise 0, gesetzt. Ist der Wert 32 größer oder gleich 0, so stellt er die Größe des Rüttelfaktors 40 zum Zeitpunkt t₂ dar und wird nachfolgend in der Routine 38 zur Steuerung des Aggregates genutzt.

Bei einer zeitweisen Änderung der Motordrehzahl 20 ergibt sich somit ein geänderter Rüttelfaktor 40. Da die Änderung der Motordrehzahl 20 direkt abhängig ist von den auf das Aggregat wirkenden Beschleunigungskräften, die infolge einer Bewegung der Fahrzeugkarosserie auftreten, kann eine Steuerung des Aggregats unter Berücksichtigung solcher Betriebszustände erfolgen. Der Rüttelfaktor 40 dient dann als Korrekturfaktor hinsichtlich der in der Routine 38 berücksichtigten Sicherheitsabschaltung eines Stellelementes des Aggregats.

Nach weiteren Ausführungsbeispielen kann die Drehzahl der Ankerwelle auch mit anderen Drehzahlsensoren, als nach dem Hallprinzip arbeitenden Sensoren ermittelt werden. Entscheidend ist, daß eine beschleunigungsbedingte Änderung der Drehzahl der Ankerwelle erfaßbar und auswertbar ist.

Durch das Verfahren wird die Steuerung des Stellelementes im Normalbetrieb des Kraftfahrzeugs nicht beeinflußt. Erst wenn sich infolge schlechter Straßenverhältnisse die Beschleunigungskräfte auswirken, setzt das Verfahren ein. Sobald die Beschleunigungskraft geringer wird oder wegfällt, wird mittels des degressiven Verfahrens 28 der gebildete Rüttelfaktor 40 wieder abgebaut.

## Patentansprüche

1. Verfahren zur elektronischen Überwachung und Steuerung des Öffnungs- und Schließvorgangs von elektrisch betriebenen Aggregaten, insbesondere von Fensterhebern und Schiebedächern, in einem Kraftfahrzeug, wobei ein an ein elektrisches Bordnetz angeschlossenes Stellorgan des Aggregates unmittelbar über elektrische Bedienelemente beziehungsweise über eine mit dem Aggregat zusammenhängende Zwischenschaltung einer Steuerelektronik beeinflußbar ist, wobei der Steuerelektronik ein von einer auf das Kraftfahrzeug einwirkenden Beschleunigungskraft abhängiges Signal zugeführt wird, **dadurch gekennzeichnet, daß** das von der Beschleunigungskraft abhängige Signal (16) aus einer Motordrehzahl (20) des elektrischen Stellorgans ermittelt wird.

2. Verfahren nach Anspruch 1, **dadurch gekennzeichnet, daß** das Signal (16) zur Berechnung eines Rüttelfaktors (40) dient.

3. Verfahren nach einem der vorhergehenden Ansprüche, **dadurch gekennzeichnet, daß** der Rüttelfaktor (40) zur Steuerung einer Sicherheitsabschaltung des elektrischen Stellorgans dient.

4. Verfahren nach einem der vorhergehenden Ansprüche, **dadurch gekennzeichnet, daß** der Rüttelfaktor (40) über ein degressives Verfahren (28) zurückgeführt wird, wenn die Beschleunigungskraft geringer wird oder wegfällt.

5. Verfahren nach einem der vorhergehenden Ansprüche, **dadurch gekennzeichnet, daß** der Rüttelfaktor (40) über ein additives Verfahren (26) aufgebaut wird, wenn die Beschleunigungskraft steigt.

6. Verfahren nach einem der vorhergehenden Ansprüche, **dadurch gekennzeichnet, daß** der Rüttelfaktor (40) zwischen einem Maximalwert (34) und einem Minimalwert (36) liegt.

7. Verfahren nach einem der vorhergehenden Ansprüche, **dadurch gekennzeichnet, daß** das von der Beschleunigungskraft abhängige Signal (16) einen Grenzwert übersteigen muß, um zur Berechnung des Rüttelfaktors (40) zu dienen.

8. Verfahren nach einem der vorhergehenden Ansprüche, **dadurch gekennzeichnet, daß** zur Ermittlung der Motordrehzahl (20) ein Drehzahlsensor verwendet wird.

9. Verfahren nach einem der vorhergehenden Ansprüche, **dadurch gekennzeichnet, daß** der Drehzahlsensor aus einem auf einer Ankerwelle eines Motors angeordneten Ringmagneten (10) und wenigstens einem Hallelement (12) besteht.

## Claims

1. Method for electronically monitoring and controlling the opening and closing process of electrically operated units, in particular of window lifters and sliding roofs, in a motor vehicle, it being possible for an actuating member, which is connected to an on-board electrical system, of the unit to be directly influenced by means of electrical operator control elements or by means of an intermediate circuit, which is connected to the unit, of a control electronics system, with a signal which is dependent on an acceleration force acting on the motor vehicle being supplied to the control electronics system, **characterized in that** the signal (16) which is dependent on the acceleration force is acquired from a motor rotation speed (20) of the electrical actuating member.

2. Method according to Claim 1, **characterized in that** the signal (16) is used to calculate a jolt factor (40).

3. Method according to either of the preceding claims, **characterized in that** the jolt factor (40) is used to control a safety shut-off of the electrical actuating member.

4. Method according to one of the preceding claims, **characterized in that** the jolt factor (40) is reduced by means of a degressive method (28) when the acceleration force becomes smaller or disappears.

5. Method according to one of the preceding claims, **characterized in that** the jolt factor (40) is built up by means of an additive method (26) when the acceleration force increases.

6. Method according to one of the preceding claims, **characterized in that** the jolt factor (40) lies between a maximum value (34) and a minimum value (36).

7. Method according to one of the preceding claims, **characterized in that** the signal (16) which is dependent on the acceleration force has to exceed a limit value in order to be used to calculate the jolt factor (40).

8. Method according to one of the preceding claims, **characterized in that** a rotation speed sensor is used to determine the motor rotation speed (20).

9. Method according to one of the preceding claims, **characterized in that** the rotation speed sensor comprises a ring magnet (10), which is arranged on an armature shaft of a motor, and at least one Hall element (12).

## Revendications

1. Procédé de surveillance électronique et de commande de l'opération d'ouverture et de fermeture d'équipements électriques notamment de lève-vitre et de toit ouvrant, dans un véhicule automobile,
selon lequel un organe d'actionnement de l'équipement, relié à un réseau électrique embarqué, est influencé directement par un élément de commande électrique ou par un circuit intermédiaire en relation avec l'équipement d'une électronique de commande,
l'électronique de commande recevant un signal dépendant d'une force d'accélération agissant sur le véhicule,
**caractérisé en ce que**
le signal (16) dépendant de la force d'accélération se détermine à partir de la vitesse de rotation du moteur (20) de l'organe d'actionnement électrique.

2. Procédé selon la revendication 1,
**caractérisé en ce que**
le signal (16) calcule un coefficient de secousse (40).

3. Procédé selon l'une des revendications précédentes,
**caractérisé en ce que**
le coefficient de secousses (40) sert à commander un circuit de sécurité de l'organe d'actionnement électrique.

4. Procédé selon l'une des revendications précédentes,
**caractérisé en ce que**
le coefficient de secousses (40) est reconduit par l'intermédiaire d'un procédé dégressif (28) lorsque la force d'accélération diminue ou disparaît.

5. Procédé selon l'une des revendications précédentes,
**caractérisé en ce que**
le coefficient de secousse (40) est établi par un procédé additif (26) lorsque la force d'accélération augmente.

6. Procédé selon l'une des revendications précédentes,
**caractérisé en ce que**
le coefficient de secousse (40) se situe entre une valeur maximale (34) et une valeur minimale (36).

7. Procédé selon l'une des revendications précédentes,
**caractérisé en ce que**
le signal (16) dépendant de la force d'accélération doit dépasser une valeur limite pour servir au calcul du coefficient de secousses (40).

8. Procédé selon l'une des revendications précédentes,
**caractérisé en ce qu'**
on utilise un capteur de vitesse de rotation pour déterminer la vitesse de rotation du moteur (20).

9. Procédé selon l'une des revendications précédentes,
**caractérisé en ce que**
le capteur de vitesse de rotation se compose d'un aimant annulaire (10) installé sur l'arbre d'induit d'un moteur et d'au moins un élément Hall (12).
